Europäisches Patentamt

European Patent Office

Office européen des brevets

(19)

(11) **EP 0 914 700 B1**

(12) **FASCICULE DE BREVET EUROPEEN**

(45) Date de publication et mention
de la délivrance du brevet:
**13.03.2002 Bulletin 2002/11**

(21) Numéro de dépôt: **97934604.6**

(22) Date de dépôt: **21.07.1997**

(51) Int Cl.$^7$: **H02J 3/26**

(86) Numéro de dépôt international:
**PCT/FR97/01352**

(87) Numéro de publication internationale:
**WO 98/05109 (05.02.1998 Gazette 1998/05)**

(54) **PROCEDE ET DISPOSITIF DE MAINTIEN DE LA FOURNITURE EN ENERGIE ELECTRIQUE DANS UN RESEAU DE DISTRIBUTION D'ENERGIE ELECTRIQUE POLYPHASEE**

**VERFAHREN UND VORRICHTUNG ZUR AUFRECHTERHALTUNG DER ELEKTRISCHEN STROMVERSORGUNG IN EINEM ELEKTRISCHEN MEHRPHASIGEN ENERGIEVERTEILUNGSNETZ**

**METHOD AND DEVICE FOR MAINTAINING ELECTRIC POWER SUPPLY IN A MULTIPHASE ELECTRIC ENERGY DISTRIBUTION NETWORK**

(84) Etats contractants désignés:
**AT BE CH DE GB IE LI SE**

(30) Priorité: **26.07.1996 FR 9609473**

(43) Date de publication de la demande:
**12.05.1999 Bulletin 1999/19**

(73) Titulaire: **ELECTRICITE DE FRANCE**
**75008 Paris (FR)**

(72) Inventeurs:
• **LEITLOFF, Volker**
**F-92120 Montrouge (FR)**

• **BERTHET, Luc**
**F-91470 Les Molières (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 0 079 504         EP-A- 0 276 181**
**US-A- 4 004 191**

**Description**

La présente invention concerne les réseaux de distribution d'énergie électrique polyphasée et se rapporte en particulier à un procédé de maintien de la fourniture en énergie électrique en présence d'un défaut sur une phase défectueuse d'une ligne de départ de tels réseaux, et à un dispositif pour la mise en oeuvre d'un tel procédé.

Le maintien de la fourniture en énergie électrique est une procédure selon laquelle les exploitants de réseaux de distribution ne déconnectent pas la ligne de départ défectueuse en présence de tels défauts affectant une phase afin de ne pas gêner les utilisateurs. En effet, le réseau est équipé de dispositifs, notamment des transformateurs, permettant de ne pas répercuter en aval, vers les utilisateurs, les défauts monophasés.

Les défauts non permanents monophasés, c'est-à-dire ceux qui ne sont pas du type auto-extincteurs ou fugitifs, et qui affectent une phase du réseau sont entre autre dûs à un isolement défectueux entre une phase et la terre, à la présence de transformateurs défectueux, ou à des ruptures de conducteurs engendrant des défauts à la terre.

Ces défauts donnent naissance à un courant de défaut pouvant provoquer une élévation de potentiel considérable au voisinage de la portion de réseau défectueuse.

Bien que ces défauts ne soient pas transmis vers les utilisateurs connectés dans le réseau, cette élévation de potentiel présente un danger important pour l'environnement (risque d'incendie), pour le matériel du réseau ou pour des personnes se trouvant à proximité de la zone incriminée (possibilité d'électrocution).

Dans les réseaux compensés, le neutre du réseau est relié à la terre par une bobine de compensation également appelée "bobine de Petersen". Cette bobine permet de minimiser le courant de défaut engendré par des défauts faiblement résistifs et à caractère transitoire.

En effet, il est possible, en agissant sur la valeur de l'inductance de la bobine, de modifier le courant "réactif" circulant dans la bobine, de manière à compenser le courant "capacitif du réseau" qui circule dans la résistance équivalente du défaut entre la phase défectueuse et la terre du réseau.

Ce type de mise à la terre du neutre du réseau permet par conséquent de limiter considérablement le courant de défaut. Il permet ainsi aux exploitants de réseaux de distribution d'énergie électrique de maintenir la fourniture en énergie électrique dans le réseau pendant les phases de détection et de réparation du défaut.

Un autre exemple de dispositif de traitement de défauts à la terre est décrit dans FR-A-2 573 256, dans lequel lorsqu'on détecte un défaut sur une phase d'un départ moyenne tension d'un réseau, un disjoncteur shunt est brièvement fermé pour mettre à la terre la phase défectueuse, ce qui annule le courant de défaut se propageant dans le réseau en aval du disjoncteur shunt.

Ce maintien de la fourniture présente néanmoins des risques lors de l'apparition de défauts plus résistifs qui s'accompagnent d'une élévation de potentiel au voisinage du défaut relativement importante.

Pour pallier cet inconvénient, les exploitants du réseau de distribution d'énergie électrique français préconisent la mise à la terre de la phase défectueuse directement ou par une résistance "Shunt" de l'ordre de quelques dizaines d'ohms afin de court-circuiter le défaut en réseau et réduire voire annuler ainsi le courant de défaut. Cette solution peut être utilisée pour les réseaux compensés et aussi pour les réseaux dont le neutre est mis à la terre par une impédance faible en déconnectant cette impédance pendant le maintien de la fourniture, la phase en défaut étant dans ce cas directement connectée à la terre sans résistance "shunt". La montée en potentiel au voisinage du défaut est dès lors fortement limitée.

Cette solution est d'une mise en oeuvre relativement aisée mais elle n'est pas toujours efficace pour certains défauts faiblement résistifs en raison de la chute de tension en ligne due au courant de charge ou dans le cas de défauts fortement résistifs provoqués par exemple par une chute ou une rupture d'un conducteur. Ces défauts peuvent alors engendrer une élévation de potentiel importante au voisinage du défaut.

Le maintien de la fourniture ne peut donc pas être envisagé dans ce cas.

Par conséquent, le maintien de la fourniture en énergie électrique dans un réseau dans lequel une phase est défectueuse présente à ce jour des risques non négligeables.

Le but de l'invention est de fournir un procédé de maintien de la fourniture en énergie électrique permettant de pallier ces inconvénients et permettant la vérification de l'annulation du courant de défaut à partir de grandeurs électriques disponibles postérieurement à la mise à la terre de la phase défectueuse.

Elle a donc pour objet un procédé de maintien de la fourniture en énergie électrique dans un réseau de distribution d'énergie électrique polyphasée en présence d'un défaut sur une phase défectueuse d'une ligne de départ du réseau, comprenant les étapes de détection du défaut et de mise à la terre de la phase défectueuse de manière à annuler le courant de défaut se propageant dans le réseau sous l'effet dudit défaut, caractérisé en ce qu'il comporte en outre les étapes de calcul d'un courant d'asymétrie résultant d'un déséquilibre entre les phases de ladite ligne et comportant une première composante représentative dudit déséquilibre en l'absence de défaut et une deuxième composante représentative dudit courant de défaut et de calcul de la différence entre la valeur dudit courant d'asymétrie et une valeur de seuil déterminée à partir de la valeur du courant d'asymétrie de ladite ligne ou du réseau en l'absence de défaut, de manière à vérifier l'annulation du courant de défaut, et de maintien de la fourniture en énergie électrique si la valeur calculée du courant d'asymétrie est inférieure à ladite valeur de seuil.

Selon un premier mode de réalisation, postérieurement à ladite étape de mise à la terre de la phase défectueuse, on réalise successivement des premières et secondes mesures d'une part, d'un courant résiduel se propageant dans le réseau et, d'autre part, de la tension présente entre le neutre du réseau et la terre, lesdites premières et secondes mesures étant réalisées chacune pour une valeur de la résistance d'un élément résistif connecté en série dans une ligne de mise à la terre de la phase défectueuse, ledit courant d'asymétrie étant calculé à partir de valeurs résultant desdites premières et secondes mesures.

Selon une caractéristique de l'invention, ledit courant résiduel mesuré est le courant résiduel se propageant dans la ligne de départ comportant ladite phase défectueuse.

Selon une autre caractéristique de l'invention, ledit courant résiduel mesuré est le courant résiduel global du réseau.

Selon un autre mode de réalisation, postérieurement à ladite étape de mise à la terre de la phase défectueuse, on réalise successivement des premières et secondes mesures d'une part, d'un courant de fuite se propageant dans une ligne de mise à la terre de la phase défectueuse et, d'autre part, de la tension présente entre le neutre du réseau et la terre, lesdites premières et secondes mesures étant réalisées chacune pour une valeur de la résistance d'un élément résistif connecté en série dans ladite ligne de mise à la terre, ledit courant d'asymétrie étant calculé à partir de valeurs résultant desdites premières et secondes mesures.

Selon une autre caractéristiques de l'invention, lesdites premières mesures sont réalisées pour une valeur nulle de la résistance dudit élément résistif.

L'invention a également pour objet un dispositif de maintien de la fourniture en énergie électrique dans un réseau de distribution d'énergie électrique polyphasée en présence d'un défaut sur une phase défectueuse d'une ligne de départ du réseau, comprenant des moyens de détection du défaut et de la phase défectueuse et des moyens sélectifs de raccordement à la terre de la phase défectueuse de manière à annuler le courant de défaut se propageant dans le réseau sous l'effet dudit défaut, caractérisé en ce qu'il comporte en outre des premiers moyens de calcul d'un courant d'asymétrie résultant d'un déséquilibre entre les phases de ladite ligne et comportant une première composante représentative dudit déséquilibre en l'absence de défaut et une deuxième composante représentative dudit courant de défaut, et des deuxièmes moyens de calcul de la différence entre la valeur dudit courant d'asymétrie délivrée par lesdits premiers moyens de calcul et une valeur de seuil déterminée à partir de la valeur du courant d'asymétrie de ladite ligne ou du réseau en l'absence de défaut de manière à vérifier l'annulation du courant de défaut, en vue d'autoriser le maintien de la fourniture en énergie électrique si la valeur calculée du courant d'asymétrie est inférieure à ladite valeur de seuil.

Selon un premier mode de réalisation de ce dispositif, lesdits premiers moyens de calcul comportent un premier organe de mesure d'un courant résiduel se propageant dans le réseau et un deuxième organe de mesure de la tension présente entre le neutre du réseau et la terre, reliés à une unité centrale de traitement pilotant un commutateur de raccordement d'un élément résistif en série dans une ligne de mise à la terre de la phase défectueuse et dans laquelle est stocké un algorithme de calcul dudit courant d'asymétrie à partir de premières et secondes valeurs délivrées par lesdits premiers et deuxièmes organes de mesure, lesdites secondes valeurs correspondant à des mesures réalisées postérieurement au raccordement dudit élément résistif.

Selon une première caractéristique de l'invention, ledit premier organe de mesure est disposé dans ladite ligne de départ.

Selon une autre caractéristique de l'invention, ledit premier organe de mesure est disposé dans une ligne d'alimentation d'un jeu de barres d'alimentation d'un ensemble de lignes de départ du réseau en vue de la mesure du courant résiduel global du réseau.

Selon un autre mode de réalisation du dispositif selon l'invention, les premiers moyens de calcul comportent un premier organe de mesure d'un courant de fuite se propageant dans les moyens de raccordement à la terre de la phase défectueuse et un deuxième organe de mesure de la tension présente entre le neutre du réseau et la terre, reliés à une unité centrale de traitement pilotant un commutateur de raccordement d'un élément résistif en série sur les moyens de raccordement à la terre de la phase défectueuse et dans laquelle est stocké un algorithme de calcul du courant d'asymétrie à partir de premières et secondes valeurs de mesure délivrées par lesdits premiers et deuxièmes organes de mesure, lesdites secondes valeurs de mesure correspondant à des mesures réalisées postérieurement au raccordement dudit élément résistif.

D'autres caractéristiques et avantages de l'invention ressortiront de la description suivante, donnée uniquement à titre d'exemple et faite en référence aux dessins annexés sur lesquels :

- la figure 1 représente le circuit équivalent d'un réseau de distribution d'énergie électrique triphasé;

- la figure 2 représente le réseau de la figure 1, équipé d'un dispositif de maintien de la fourniture en énergie électrique selon l'invention ;

- la figure 3 est un organigramme indiquant les différentes phases du procédé selon l'invention ;

- la figure 4 représente le réseau de la figure 1 équipé d'un dispositif de maintien de la fourniture selon un autre mode de réalisation ; et

- la figure 5 représente le réseau de la figure 1 équipé d'un troisième mode de réalisation du dispositif selon l'invention.

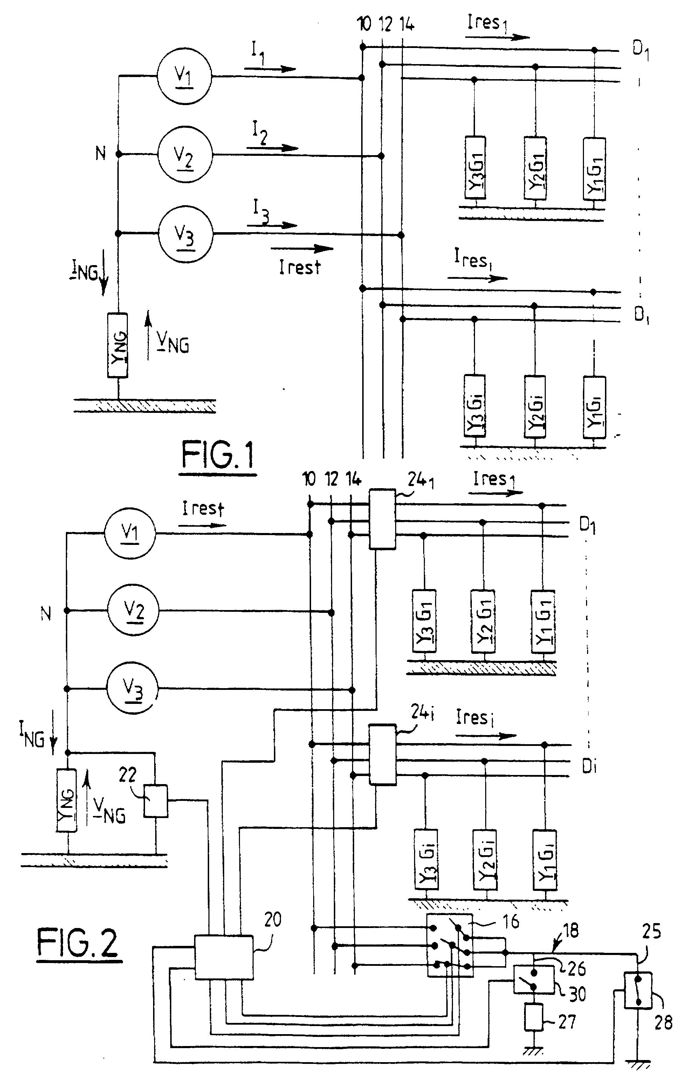

Sur la figure 1 on a représenté le circuit équivalent d'un réseau de distribution d'énergie électrique triphasée.

Le poste d'alimentation du réseau est constitué par une source de tension triphasée alimentant par une ligne d'alimentation un jeu de barres, 10,12 et 14, auxquelles sont reliées les lignes de départ du réseau.

Sur cette figure, $\underline{V1}$, $\underline{V2}$ et $\underline{V3}$ désignent respectivement les tensions délivrées par le poste d'alimentation, I1,I2 et I3 désignent les courants délivrés par ce poste d'alimentation, $I_{rest}$ désigne le courant résiduel total en sortie du poste d'alimentation, correspondant au courant résiduel global du réseau, $D_i$ désigne la ligne de départ n°i et $I_{resi}$ désigne le courant résiduel la ligne de départ n°i.

Par ailleurs, $\underline{Y}1Gi$, $\underline{Y}2Gi$ et $\underline{Y}3Gi$ désignent les admittances globales phase-terre de chacune des trois phases du départ n°i.

Le neutre N du réseau est relié à la terre par une bobine de compensation réactive d'admittance $\underline{Y}_{NG}$ ou par une impédance d'une faible valeur.

La description qui va suivre est relative au mode de mise à la terre par une bobine de compensation.

Dans le cas d'une mise à la terre par une faible impédance on déconnecte l'impédance dans la ligne de mise à la terre pendant le maintien de la fourniture.

Si l'on considère que la partie résistive des admittances phase-terre est négligeable devant la partie capacitive, lorsqu'apparaît un défaut monophasé sur une des phases, le courant réactif $\underline{I}_{NG}$ traversant cette bobine de compensation compense le courant capacitif du réseau, ce qui limite le courant de défaut engendré par le défaut.

Comme cela a été mentionné précédemment, avec ce régime de mise à la terre du neutre, il est possible de maintenir la fourniture en énergie électrique en présence d'un défaut monophasé, en raison de la valeur relativement faible du courant de défaut.

Le maintien de la fourniture peut néanmoins présenter un danger dans le cas de défauts faiblement résistifs, en raison de la chute de tension en ligne due au courant de charge, ou dans le cas de défauts fortement résistifs, provoqués par exemple par la rupture ou la chute d'un conducteur d'une ligne de départ.

Sur la figure 2, on a représenté le circuit équivalent du réseau de distribution de la figure 1 équipé d'un dispositif permettant de pallier cet inconvénient et de gérer le maintien de la fourniture en énergie électrique lors de l'apparition d'un tel défaut monophasé.

On voit sur cette figure 2 que le réseau, identique à celui de la figure 1, est équipé d'un commutateur 16 à trois états raccordé à la terre par une ligne 18 de mise à la terre, permettant de raccorder sélectivement à la terre chacune des barres 10,12 et 14 en vue de la mise à la terre de la phase défectueuse.

Le commutateur 16 est piloté par une unité centrale de traitement 20 reliée à un organe de mesure 22 de la tension $\underline{V}_{NG}$ présente entre le neutre N et la terre du réseau et à un ensemble d'organes de mesure 24 1...24i du courant résiduel circulant dans chaque ligne de départ D1,...Di.

L'unité centrale de traitement 20 est de type connu et ne sera donc pas décrite en détail par la suite.

Lorsqu'apparaît un défaut monophasé résistif sur une phase d'une ligne de départ, par exemple sur la ligne de départ D1, ce défaut est détecté par l'unité centrale de traitement 20 qui commande le commutateur 16 pour relier cette phase défectueuse à la ligne 18 de raccordement à la terre.

Sur cette figure 2, la phase correspondant à la barre 14 est défectueuse et mise à la terre.

Avantageusement, la commutation du commutateur 16 est réalisée après un délai suffisant pour attendre l'auto-extinction éventuelle du défaut, dans le cas où ce défaut est du type "fugitif". Ainsi, le raccordement à la terre de la phase défectueuse ne s'effectue que dans le cas de défauts permanents.

On voit sur la figure 2 que la ligne 18 de raccordement à la terre de la phase défectueuse comporte deux branches parallèles, à savoir une première branche 25 de raccordement direct à la terre de la phase défectueuse et une branche 26 de raccordement à la terre par l'intermédiaire d'une résistance 27.

Chacune des branches 25 et 26 est équipée d'un commutateur, respectivement 28 et 30, piloté par l'unité centrale de traitement 20 afin de provoquer le raccordement à la terre de la phase défectueuse soit directement, par l'intermédiaire de la première branche 25, soit par l'intermédiaire de la résistance 27.

Il est à noter que les deux commutateurs 28 et 30 fonctionnent de façon alternative de sorte que lorsque l'un de ces commutateurs est ouvert, l'autre est fermé.

Il est à noter que la résistance 27 a une valeur adaptée pour l'utilisation envisagée, comme cela sera décrit en détail par la suite, par exemple une valeur voisine de 100 ohms pour un réseau compensé et voisine de 8 ohms dans le cas d'une mise à la terre par une faible impédance.

Le courant de court-circuit circulant dans la ligne 18 de raccordement à la terre engendre une tension entre la phase défectueuse et la terre au niveau du poste d'alimentation qui compense une partie de la chute de tension due au courant de charge en ligne.

La montée en potentiel à l'emplacement du défaut, étant dépendante de la chute de tension dans la phase défectueuse, le raccordement à la terre par la ligne 18 de mise à la terre permet de réduire les contraintes à l'endroit du défaut. Dans la plupart des cas, le courant de défaut est alors annulé. Dans ces cas il n'y a pas d'élévation de potentiel. Il est ainsi possible d'envisager le maintien de la fourniture en énergie électrique en présence de ce défaut.

Par ailleurs, l'unité centrale de traitement 20 vérifie l'annulation du courant de défaut.

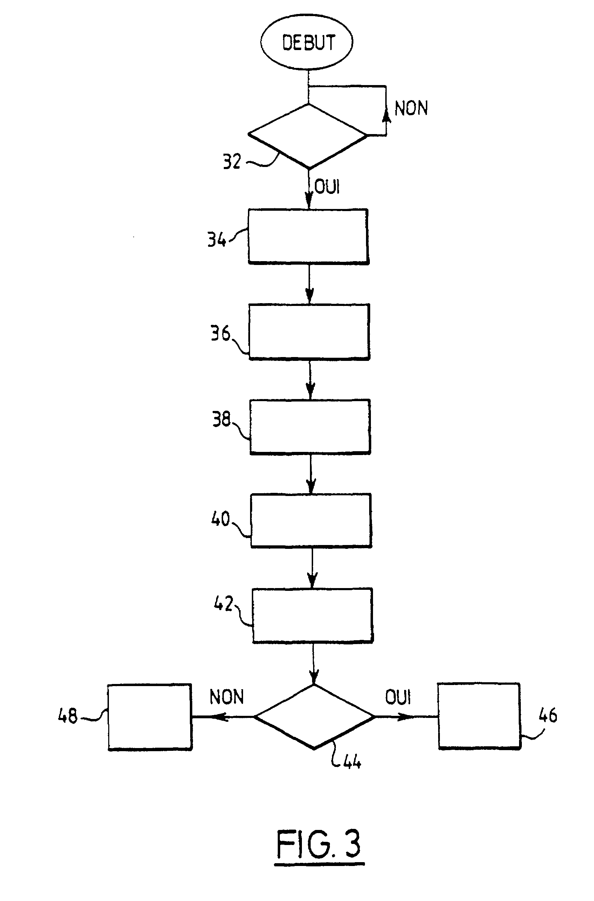

Le procédé de maintien de la fourniture en énergie électrique dans le réseau de la figure 2 va maintenant être décrit en référence à la figure 3.

Au cours de ce procédé, on surveille de façon continue, au cours d'une première étape 32, le réseau de distribution, en vue de la détection d'un défaut sur une phase d'une ligne de départ du réseau.

La détection d'un défaut peut être effectuée par différentes techniques connues, par exemple en utilisant des protections wattmétriques sur chaque ligne de départ du réseau, ou en utilisant des procédés connus de détection de défauts résistifs.

Si un défaut dont la résistance est inférieure à une valeur prédéterminée (1 Kohm) a été détecté sur le réseau, on détermine, au cours de l'étape 34 suivante, la ligne de départ et la phase défectueuses, afin de provoquer la commutation du commutateur 16 pour raccorder à la terre la phase concernée, de préférence avec un retard suffisant pour attendre l'auto-extinction de défaut.

Au cours de l'étape 36 suivante, l'unité centrale de traitement 20 acquiert une première valeur vectorielle de mesure $I_{resa}$ du courant résiduel circulant dans la ligne de départ défectueuse ainsi qu'une première valeur vectorielle de mesure $\underline{V}_{NGa}$ de la tension présente entre le neutre et la terre du réseau, à l'aide des organes de mesure 22 et 24 i correspondants.

Il est à noter qu'au cours de cette étape de mesure 36, le commutateur 28 est fermé et le commutateur 30 est ouvert de sorte que la phase défectueuse est raccordée directement à la terre par l'intermédiaire de la branche 25 de la ligne 18 de raccordement à la terre et que la branche 26 est ouverte.

Au cours de l'étape 38 suivante, l'unité de traitement 20 provoque la commutation à l'ouverture du commutateur 28 et la commutation à la fermeture du commutateur 30 de sorte que la phase défectueuse est raccordée à la terre par l'intermédiaire de la résistance 27.

L'unité centrale de traitement 20 mesure ensuite, dans l'étape 40 suivante, la valeur $I_{resb}$ du courant résiduel circulant dans la ligne de départ à laquelle appartient la phase défectueuse ainsi que la valeur $\underline{V}_{NGb}$ de la tension présente entre le neutre N et la terre du réseau.

Dès lors, l'unité centrale de traitement dispose des premières valeurs $I_{resa}$ et $\underline{V}_{NGa}$ du courant résiduel et de la tension neutre terre préalablement à la commutation des commutateurs 28 et 30 et de secondes valeurs $I_{resb}$ et $\underline{V}_{NGb}$ du courant résiduel et de la tension neutre terre du réseau postérieurement à la commutation des commutateurs 28 et 30.

Au cours de l'étape 42 suivante, le courant d'asymétrie $I_{kDD}$ est calculé par l'unité centrale de traitement 20, au moyen d'un algorithme de calcul approprié, à partir de ces valeurs $I_{resa}$, $\underline{V}_{NGa}$ et $I_{resb}$, et $\underline{V}_{NGb}$

à partir d'un algorithme de calcul approprié stocké dans l'unité 20, à partir de la relation suivante :

$$I_{kDD} = I_{resb} - \frac{\Delta I_{res}}{\Delta \underline{V}_{NG}} \times \underline{V}_{NGb} \qquad (1)$$

dans laquelle :

$$\Delta I_{res} = I_{resb} - I_{resa} \text{ et}$$
$$\Delta \underline{V}_{NG} = \underline{V}_{NGb} - \underline{V}_{NGa}$$

Par ailleurs, si le défaut est présent lors des deux mesures effectuées lors des étapes 36 et 40 précédentes, ce qui est le cas en présence d'un défaut permanent, le courant d'asymétrie $I_{kDD}$ satisfait à la relation suivante :

$$I_{kDD} = I_{knDD} + \frac{V_{nom}}{R_F} \qquad (2)$$

dans laquelle $V_{nom}$ est la tension nominale simple du réseau,

$R_F$ est la résistance du défaut, et

$I_{knDD}$ est le courant d'asymétrie naturel de la ligne de départ en l'absence du défaut.

On conçoit que ce courant d'asymétrie ou de déséquilibre comporte une première composante, $I_{knDD}$, représentative du courant d'asymétrie en l'absence de défaut et une dernière composante $\frac{V_{nom}}{R_F}$ représentative du courant de défaut.

Il est à noter que le courant d'asymétrie naturel de la ligne de départ $I_{knDD}$ présente de façon connue une valeur relativement faible inférieure à une valeur comprise approximativement entre 0,2 et 0,4 A.

On suppose par ailleurs que pour une valeur de résistance de défaut $R_F$ supérieure ou égale à une valeur voisine de 1 kohm, la distribution en énergie électrique ne doit pas être maintenue.

Dès lors, pour une valeur nominale $V_{nom}$ de la tension du réseau égale à 11,5 kV, on décide que la distribution d'énergie électrique dans le réseau ne doit pas être maintenue pour une valeur du courant d'asymétrie $I_{kDD}$ supérieure à une valeur comprise entre approximativement 2 A et 20 A.

Ainsi, au cours de l'étape 44 suivante, l'unité centrale de traitement compare à l'aide d'un algorithme de calcul approprié le courant d'asymétrie $I_{kDD}$ calculé au cours de l'étape 42 précédente avec une valeur de seuil $I_{kDDmax}$ supérieure à une valeur comprise entre approximativement 2 A et 20 A et représentative de la valeur maximale du courant d'asymétrie autorisée à circuler dans le réseau.

Par conséquent, si au cours de l'étape 44 il a été constaté que le courant d'asymétrie $I_{kDD}$ est supérieur à la valeur de seuil $I_{kDDmax}$ on décide, au cours de l'étape 46 suivante d'interrompre la distribution en énergie électrique en déconnectant la ligne de départ en défaut.

Par ailleurs, si au cours de cette étape 44 il a été constaté que la valeur du courant d'asymétrie $I_{kDD}$ est inférieure à la valeur maximale de seuil $I_{kDDmax}$ on décide de maintenir la distribution d'énergie électrique au cours d'une phase ultérieure classique de détection de l'emplacement du défaut et de l'intervention des équipes de maintenance.

Ainsi, la distribution d'énergie électrique dans le réseau est maintenue si le courant de défaut, est annulé.

La fourniture en énergie électrique peut ainsi être maintenue sans risque.

Si tel n'est pas le cas, la mise à la terre de la phase défectueuse ne suffit pas pour annuler le courant de défaut et pour limiter ainsi l'élévation de potentiel au voisinage du défaut et la fourniture doit être interrompue pour supprimer tous les risques d'incidents pour les personnes ou l'environnement.

Dans l'exemple de réalisation qui vient d'être décrit, la vérification de l'annulation du courant de défaut est effectuée à partir de la surveillance du courant résiduel $I_{res}$ de la ligne de départ défectueuse.

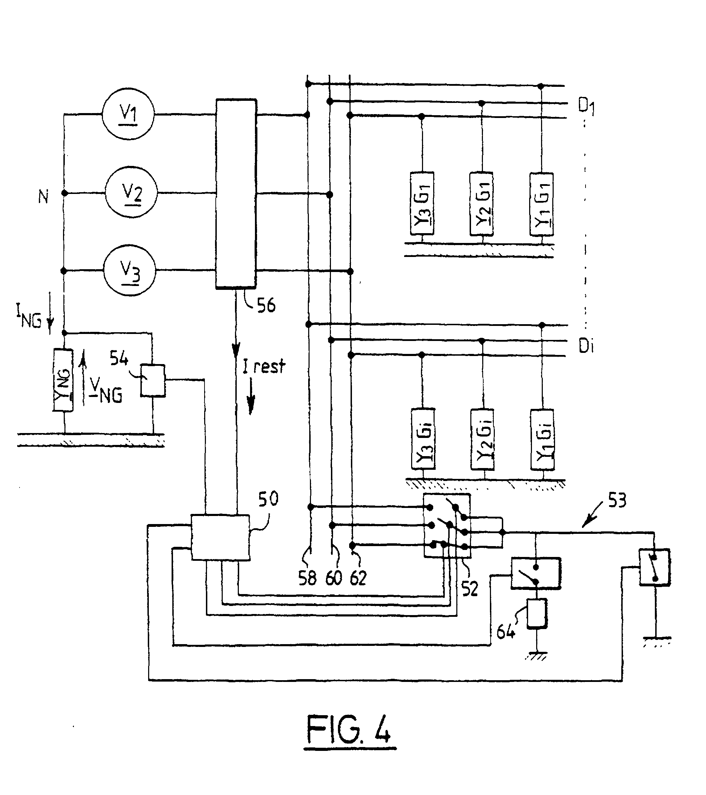

Selon un autre mode de réalisation du dispositif selon l'invention représenté sur la figure 4, on surveille la valeur du courant de défaut à partir du courant résiduel global $I_{rest}$ du réseau.

Comme dans l'exemple de réalisation décrit précédemment en référence à la figure 2, ce dispositif comporte une unité centrale de traitement 50 pilotant un commutateur à trois états 52 en vue du raccordement à la terre la phase défectueuse par l'intermédiaire d'une ligne 53 de raccordement à la terre.

Le dispositif comporte en outre, comme précédemment, un organe 54 de mesure de la tension $\underline{V}_{NG}$ présente entre le neutre et la terre du réseau.

Par ailleurs, l'unité centrale de traitement 50 est reliée à un organe 56 de mesure du courant résiduelle globale du réseau $I_{rest}$ branché sur la ligne d'arrivée du jeu de barres 58,60 et 62 d'alimentation des lignes de départ $D_1,...D_i$.

Le procédé de maintien de la fourniture mis en oeuvre dans ce dispositif est identique à celui décrit à la figure 2 et ne sera donc pas repris par la suite.

Toutefois, la valeur de courant d'asymétrie du réseau $I_{kR}$ est calculée, au cours de l'étape 42 à l'aide de la relation suivante :

$$I_{kR} = I_{resta} - \frac{\Delta I_{rest}}{\Delta \underline{V}_{NG}} \times \underline{V}_{NGa} \qquad (3)$$

dans laquelle :

$$\Delta I_{rest} = I_{restb} - I_{resta}$$

$I_{resta}$ désignant la valeur du courant résiduel global du réseau lorsque la résistance 64 de raccordement à la terre est déconnectée et $I_{restb}$ désignant la valeur de ce courant résiduel global lorsque cette résistance 64 est connectée.

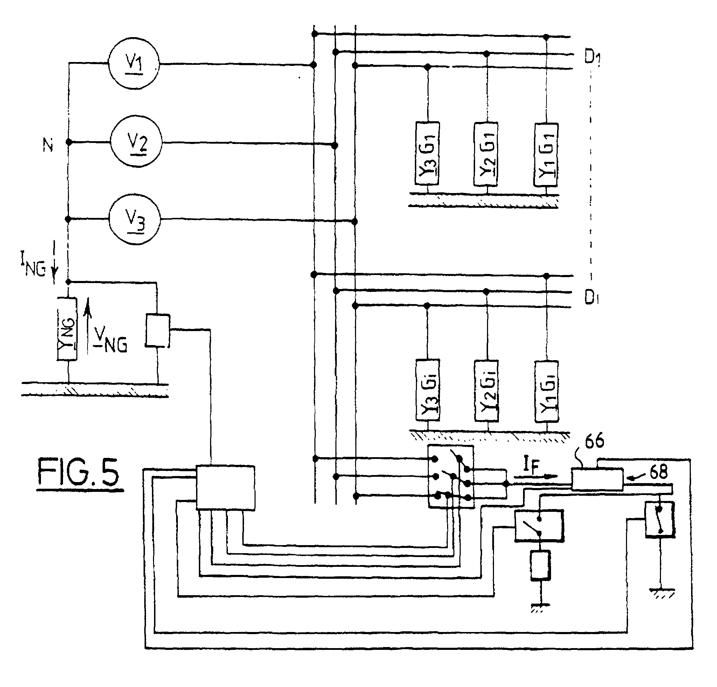

Selon un autre mode de réalisation représenté sur la figure 5, le courant de défaut est surveillé, postérieurement au raccordement à la terre de la phase défectueuse, à partir de la valeur de courant de fuite ou courant "shunt" circulant dans la ligne de raccordement à la terre de la phase défectueuse.

On voit sur cette figure 5 que ce dispositif est équipé d'un organe de mesure 66 du courant de fuite $I_f$ circulant dans la ligne 68 de raccordement à la terre de la phase défectueuse.

Comme précédemment, on calcule le courant de d'asymétrie $I_{kR}$ circulant dans le réseau à partir de deux valeurs successives du courant de fuite $I_f$ circulant dans la ligne de mise à la terre de la phase défectueuse et de la tension $\underline{V}_{NG}$ de la tension présente entre le neutre N et la terre du réseau, pour deux valeurs différentes de la résistance de la ligne 68 de mise à la terre et, comme précédemment, on compare cette valeur calculée $I_{kR}$ avec une valeur de seuil, similaire à la valeur de seuil $I_{kRmax}$ mentionnée précédemment, en vue de maintenir la distribution en énergie électrique ou de déconnecter le poste source pour supprimer tous les risques d'incidents.

On conçoit que l'invention qui vient d'être décrite permet d'une part de minimiser l'influence d'un défaut monophasé apparaissant dans un réseau de distribution d'énergie électrique, de maintenir la distribution en énergie électrique si le courant de défaut est annulé par la mise à la terre de la phase et que celui-ci ne présente aucun danger et, d'autre, de couper la distribution en cas de danger.

Elle permet en outre la surveillance et le contrôle du courant de défaut à partir de grandeurs caractéristiques disponibles directement dans le réseau et est donc relativement simple à mettre en oeuvre.

**Revendications**

**1.** Procédé de maintien de la fourniture en énergie électrique dans un réseau de distribution d'énergie électrique polyphasée en présence d'un défaut sur une phase défectueuse d'une ligne ($D_i$) de départ du réseau, comprenant les étapes de détection du défaut et de mise à la terre de la phase défectueuse de manière à annuler le courant de défaut se propageant dans le réseau sous l'effet dudit défaut, **caractérisé en ce qu'**il comporte en outre les étapes de calcul d'un courant d'asymétrie ($I_{kDD}$;$I_{kR}$) résultant d'un déséquilibre entre les phases de ladite ligne et comportant une première composante représentative du déséquilibre en l'absence de défaut et une deuxième composante représentative dudit courant de défaut et de calcul de la différence entre la valeur dudit courant d'asymétrie ($I_{kDD}$;$I_{kR}$) et une valeur de seuil ($I_{kDDmax}$;$I_{kRmax}$) déterminée à partir de la valeur du courant d'asymétrie de ladite ligne de départ ou du réseau en l'absence de défaut, de manière à vérifier l'annulation du courant de défaut et de maintien de la fourniture en énergie électrique si la valeur calculée du courant d'asymétrie ($I_{kDD}$;$I_{kR}$) est inférieure à ladite valeur de seuil ($I_{kDDmax}$;$I_{kRmax}$).

2. Procédé selon la revendication 1, **caractérisé en ce que** postérieurement à ladite étape de mise à la terre de la phase défectueuse on réalise successivement des premières et secondes mesures d'une part d'un courant résiduel ($I_{resi}$;$I_{rest}$) se propageant dans le réseau et, d'autre part, de la tension ($\underline{V}_{NG}$) présente entre le neutre du réseau (N) et la terre, lesdites premières et secondes mesures étant réalisées chacune pour une valeur de la résistance d'un élément résistif (27;64) connectée en série dans une ligne (18;53;68) de mise à la terre de la phase défectueuse, et **en ce que** l'on calcule ledit courant d'asymétrie ($I_{kDD}$;$I_{kR}$) à partir de valeur résultant desdites premières et secondes mesures.

3. Procédé selon la revendication 2, **caractérisé en ce que** ledit courant résiduel mesuré est le courant résiduel ($I_{resi}$) se propageant dans la ligne de départ ($D_i$) comportant ladite phase défectueuse.

4. Procédé selon la revendication 2, **caractérisé en ce que** ledit courant résiduel mesuré est le courant résiduel ($I_{rest}$) global du réseau.

5. Procédé selon la revendication 1, **caractérisé en ce que** postérieurement à ladite étape de mise à la terre de la phase défectueuse, on réalise successivement des premières et secondes mesures d'une part, d'un courant de fuite ($I_f$) se propageant dans une ligne de mise (68) à la terre de la phase défectueuse et, d'autre part, de la tension ($\underline{V}_{NG}$) présente entre le neutre (N) du réseau et la terre, lesdites premières et secondes mesures étant réalisées chacune pour une valeur de la résistance d'un élément résistif connecté en série dans ladite ligne (68) de mise à la terre, et **en ce que** l'on calcule ledit courant d'asymétrie ($I_{kR}$) à partir de valeurs résultant desdites premières et secondes mesures.

6. Procédé selon l'une quelconque des revendications 2 à 5, **caractérisé en ce que** lesdites premières mesures sont réalisées pour une valeur nulle de la résistance dudit élément résistif.

7. Dispositif de maintien de la fourniture en énergie électrique dans un réseau de distribution d'énergie électrique polyphasée en présence d'un défaut sur une phase défectueuse d'une ligne de départ ($D_i$) du réseau, comprenant des moyens de détection du défaut et de la phase défectueuse et des moyens sélectifs de raccordement à la terre (18;53;68) de la phase défectueuse de manière à annuler le courant de défaut se propageant dans le réseau sous l'effet dudit défaut, **caractérisé en ce qu'**il comporte en outre des premiers moyens de calcul (20;50) d'un courant d'asymétrie ($I_{kDD}$;$I_{kR}$) résultant d'un déséquilibre entre les phases de ladite ligne ($D_i$) et comportant une première composante représentative dudit déséquilibre en l'absence de défaut et une deuxième composante représentative dudit courant de défaut, et des deuxièmes moyens de calcul (20;50) de la différence entre la valeur dudit courant d'asymétrie ($I_{kDD}$;$I_{kR}$) délivrée par lesdits premiers moyens de calcul et une valeur de seuil ($I_{kDDmax}$;$I_{kRmax}$) déterminée à partir de la valeur du courant d'asymétrie de ladite ligne ($D_i$) ou du réseau en l'absence de défaut de manière à vérifier l'annulation du courant de défaut, en vue d'autoriser le maintien de la fourniture en énergie électrique si la valeur calculée du courant d'asymétrie ($I_{kDD}$;$I_{kR}$) est inférieure à ladite valeur de seuil ($I_{kDDmax}$;$I_{kRmax}$).

8. Dispositif selon la revendication 7, **caractérisé en ce que** lesdits premiers moyens de calcul comportent un premier organe de mesure (24i;56) d'un courant résiduel ($I_{resi}$;$I_{rest}$) se propageant dans le réseau et un deuxième organe de mesure (22;54) de la tension ($\underline{V}_{NG}$) présente entre le neutre (N) du réseau et la terre, reliés à une unité centrale de traitement (20;50) pilotant un commutateur (30) de raccordement d'un élément résistif (27;64) en série dans une ligne de mise à la terre (18;53) de la phase défectueuse et dans laquelle est stocké un algorithme de calcul dudit courant d'asymétrie ($I_{kDD}$; $I_{kR}$) à partir de premières et secondes valeurs délivrées par lesdits premiers (24i;56) et deuxièmes organes de mesure (22;54), lesdites secondes valeurs correspondant à des mesures réalisées postérieurement au raccordement dudit élément résistif.

9. Dispositif selon la revendication 8, **caractérisé en ce que** ledit premier organe de mesure (24i) est disposé dans ladite ligne de départ.

10. Dispositif selon la revendication 8, **caractérisé en ce que** ledit premier organe de mesure (56) est disposé dans une ligne d'alimentation d'un jeu de barres (58,60,62) d'alimentation d'un ensemble de lignes ($D_i$) de départ du réseau en vue de la mesure du courant résiduel global ($I_{rest}$) dudit réseau.

11. Dispositif selon la revendication 7, **caractérisé en ce que** les premiers moyens de calcul comportent un premier organe de mesure (66) d'un courant de fuite ($I_f$) se propageant dans les moyens de raccordement à la terre (68) de la phase défectueuse et un deuxième organe de mesure de la tension ($\underline{V}_{NG}$) présente entre le neutre (N) du réseau et la terre reliés à une unité centrale de traitement pilotant un commutateur de raccordement d'un élément résistif en série sur les moyens de raccordement à la terre (68) de la phase défectueuse et dans laquelle est stocké un algorithme de calcul du courant d'asymétrie ($I_{kR}$) à partir de premières et secondes valeurs de mesure délivrées par lesdits premiers et deuxièmes organes de mesure, lesdites secondes valeurs de mesure correspondant à des mesures réalisées postérieurement au raccordement dudit élément résistif.

**Patentansprüche**

1. Verfahren zum Aufrechterhalten der elektrischen Energieversorgung in einem mehrphasigen elektrischen Energieversorgungsnetz in Anwesenheit einer Störung auf einer fehlerhaften Phase einer Ausspeisungsleitung ($D_i$) des Netzes, mit den Schritten des Erfassens der Störung und der Erdung der fehlerhaften Phase derart, dass der Fehlerstrom, der sich in dem Netz unter der Wirkung der Störung ausbreitet, entfernt wird, **dadurch gekennzeichnet, dass** es außerdem die Schritte der Berechnung eines Asymmetriestromes ($I_{KDD}$; $I_{KR}$), der sich aus einem Ungleichgewicht zwischen den Phasen der Leitung ergibt, und der eine erste repräsentative Komponente für das Ungleichgewicht in Abwesenheit der Störung und eine zweite repräsentative Komponente für den Fehlerstrom aufweist, und der Berechnung der Differenz zwischen dem Wert des Asymmetriestromes ($I_{KDD}$; $I_{KR}$) und einem Schwellenwert ($I_{KDDmax}$; $I_{KRmax}$) umfasst, der ausgehend von dem Wert des Asymmetriestromes der Ausspeisungsleitung oder des Netzes in Abwesenheit der Störung bestimmt wird, so dass die Aufhebung des Fehlerstromes und das Aufrechterhalten der elektrischen Energieversorgung überprüft wird, wenn der berechnete Wert des Asymmetriestromes ($I_{KDD}$; $I_{KR}$) kleiner als der Schwellenwert ($I_{KDDmax}$; $I_{KRmax}$) ist.

2. Verfahren gemäß Anspruch 1, **dadurch gekennzeichnet, dass** nach dem Schritt der Erdung der fehlerhaften Phase nacheinander erste und zweite Messungen einerseits eines Reststromes ($I_{resi}$; $I_{rest}$), der sich in dem Netz verbreitet, und andererseits der Spannung ($\underline{V}_{NG}$), die zwischen dem Nullleiter des Netzes (N) und der Erde vorhanden ist, durchgeführt werden, wobei die ersten und zweiten Messungen jeweils für einen Widerstandswert eines Widerstandselementes (27; 64), das in Reihe auf einer Leitung (18; 53; 68) zur Erdung der fehlerhaften Phase angeschlossen ist, durchgeführt werden, und dass der Asymmetriestrom ($I_{KDD}$; $I_{KR}$) ausgehend von dem Wert berechnet wird, der sich aus den ersten und zweiten Messungen ergibt.

3. Verfahren gemäß Anspruch 2, **dadurch gekennzeichnet, dass** der gemessene Reststrom der Reststrom ($I_{resi}$) ist, der sich in der Ausspeisungsleitung ($D_i$) mit der fehlerhaften Phase ausbreitet.

4. Verfahren gemäß Anspruch 2, **dadurch gekennzeichnet, dass** der gemessene Reststrom der gesamte Reststrom ($I_{rest}$) des Netzes ist.

5. Verfahren gemäß Anspruch 1, **dadurch gekennzeichnet, dass** nach dem Schritt der Erdung der fehlerhaften Phase nacheinander erste und zweite Messungen einerseits eines Erdstromes ($I_f$), der sich in einer Erdungsleitung (68) der fehlerhaften Phase ausbreitet, und andererseits der Spannung ($\underline{V}_{NG}$), die zwischen dem Nullleiter des Netzes (N) und der Erde vorhanden ist, durchgeführt werden, wobei die ersten und zweiten Messungen jeweils für einen Widerstandswert eines Widerstandselementes (27; 64), das in Reihe auf der Leitung (68) zur Erdung angeschlossen ist, durchgeführt werden, und dass der Asymmetriestrom ($I_{KR}$) ausgehend von den Werten berechnet wird, die sich aus den ersten und zweiten Messungen ergeben.

6. Verfahren gemäß irgendeinem der Ansprüche 2 bis 5, **dadurch gekennzeichnet, dass** die ersten Messungen für einen Nullwert des Widerstandes des Widerstandselementes durchgeführt werden.

7. Vorrichtung zum Aufrechterhalten der elektrischen Energieversorgung in einem mehrphasigen elektrischen Energieversorgungsnetz in Anwesenheit einer Störung auf einer fehlerhaften Phase einer Ausspeisungsleitung ($D_i$) des Netzes, mit Vorrichtungen zur Erfassung der Störung und der fehlerhaften Phase und selektiven Vorrichtungen zum Anschluss der fehlerhaften Phase an die Erde (18; 53; 68) derart, dass der Fehlerstrom, der sich in dem Netz unter der Wirkung der Störung ausbreitet, entfernt wird, **dadurch gekennzeichnet, dass** sie außerdem erste Vorrichtungen zur Berechnung (20; 50) eines Asymmetriestromes ($I_{KDD}$; $I_{KR}$), der sich aus einem Ungleichgewicht zwischen den Phasen der Leitung ($D_i$) ergibt, und der eine erste repräsentative Komponente für das Ungleichgewicht in Abwesenheit der Störung und eine zweite repräsentative Komponente für den Fehlerstrom aufweist, und zweite Vorrichtungen zur Berechnung (20; 50) der Differenz zwischen dem Wert des Asymmetriestromes ($I_{KDD}$; $I_{KR}$), der von den ersten Berechnungsvorrichtungen geliefert wird, und einem Schwellenwert ($I_{KDDmax}$; $I_{KRmax}$) umfasst, der ausgehend von dem Wert des Asymmetriestromes der Leitung ($D_i$)

oder des Netzes in Abwesenheit der Störung bestimmt wird, so dass die Aufhebung des Fehlerstromes im Hinblick auf die Ermöglichung des Aufrechterhaltens der elektrischen Energieversorgung überprüft wird, wenn der berechnete Wert des Asymmetriestromes ($I_{KDD}$; $I_{KR}$) kleiner als der Schwellenwert ($I_{KDDmax}$; $I_{KRmax}$) ist.

8. Vorrichtung gemäß Anspruch 7, **dadurch gekennzeichnet, dass** die ersten Berechnungsvorrichtungen ein erstes Organ zur Messung (24i; 56) eines Reststromes ($I_{resi}$; $I_{rest}$), der sich in dem Netz verbreitet, und ein zweites Organ zur Messung (22; 54) der Spannung ($\underline{V}_{NG}$), die zwischen dem Nulleiter (N) des Netzes und der Erde vorhanden ist, aufweisen, welche an eine zentrale Verarbeitungseinheit (20; 50) angeschlossen sind, die einen Umschalter (30) zum Anschluss eines Widerstandselementes (27; 54) in Reihe in einer Leitung zur Erdung (18; 53) der fehlerhaften Phase fernsteuert, und in der ein Berechnungsalgorithmus für den Asymmetriestrom ($I_{KDD}$; $I_{KR}$) ausgehend von den ersten und zweiten Werten, die von den ersten (24i; 54) und zweiten Messorganen (22; 54) geliefert werden, gespeichert ist, wobei die zweiten Werte den nach dem Anschluss des Widerstandselementes durchgeführten Messungen entsprechen.

9. Vorrichtung gemäß Anspruch 8, **dadurch gekennzeichnet, dass** das erste Messorgan (24i) in der Ausspeisungsleitung angeordnet ist.

10. Vorrichtung gemäß Anspruch 8, **dadurch gekennzeichnet, dass** das erste Messorgan (56) in einer Versorgungsleitung für ein Sammelschienensystem (58, 60, 62) zur Versorgung einer Anordnung von Ausspeisungsleitungen (Di) des Netzes im Hinblick auf die Messung des gesamten Reststromes ($I_{rest}$) des Netzes angeordnet ist.

11. Vorrichtung gemäß Anspruch 7, **dadurch gekennzeichnet, dass** die ersten Berechnungsvorrichtungen ein erstes Messorgan (66) für einen Erdstrom ($I_f$), der sich in den Anschlussvorrichtungen an die Erde (68) der fehlerhaften Phase ausbreitet, und ein zweites Messorgan für die Spannung ($\underline{V}_{NG}$), die zwischen dem Nulleiter (N) des Netzes und der Erde vorhanden ist, aufweisen, welche an eine zentrale Verarbeitungseinheit angeschlossen sind, die einen Umschalter zum Anschluss eines Widerstandselementes in Reihe auf den Vorrichtungen zum Anschluss an die Erde (68) der fehlerhaften Phase fernsteuert, und in der ein Berechnungsalgorithmus für den Asymmetriestrom ($I_{KR}$) ausgehend von den ersten und zweiten Messwerten, die von den ersten und zweiten Messorganen geliefert werden, gespeichert ist, wobei die zweiten Messwerte den nach dem Anschluss des Widerstandselementes durchgeführten Messungen entsprechen.

**Claims**

1. Process for maintaining the provision of electrical energy in a polyphase electrical energy distribution network in the presence of a fault on a defective phase of an outgoing feeder line ($D_i$) of the network, comprising the steps of detecting the fault and of earthing the defective phase in such a way as to zero the fault current propagating in the network under the effect of the said fault, **characterized in that** it furthermore comprises the steps of calculating an asymmetry current ($I_{kDD}$; $I_{kR}$) resulting from an imbalance between the phases of the said line and comprising a first component representative of the imbalance in the absence of any fault and a second component representative of the said fault current and of calculating the difference between the value of the said asymmetry current ($I_{kDD}$; $I_{kR}$) and a threshold value ($I_{kDDmax}$; $I_{kRmax}$) determined from the value of the asymmetry current of the said outgoing feeder line or of the network in the absence of a fault, in such a way as to verify the zeroing of the fault current and of maintaining the provision of electrical energy if the calculated value of the asymmetry current ($I_{kDD}$; $I_{kR}$) is less than the said threshold value ($I_{kDDmax}$; $I_{kRmax}$).

2. Process according to Claim 1, **characterized in that** subsequent to the said step of earthing the defective phase, first and second measurements are carried out in succession, on the one hand, of a residual current ($I_{resi}$; $I_{rest}$) propagating in the network and, on the other hand, of the voltage ($\underline{V}_{NG}$) present between the neutral of the network (N) and earth, the said first and second measurements each being carried out for a value of the resistance of a resistive element (27; 64) connected in series in a line (18; 53; 68) for earthing the defective phase, and **in that** the said asymmetry current ($I_{kDD}$; $I_{kR}$) is calculated from a value resulting from the said first and second measurements.

3. Process according to Claim 2, **characterized in that** the said measured residual current is the residual current ($I_{resi}$) propagating in the outgoing feeder line ($D_i$) comprising the said defective phase.

4. Process according to Claim 2, **characterized in that** the said measured residual current is the overall residual current ($I_{rest}$) of the network.

5. Process according to Claim 1, **characterized in that** subsequent to the said step of earthing the defective phase, first and second measurements are carried out in succession, on the one hand, of a leakage current ($I_1$) propagating in a line (68) for earthing the defective phase and, on the other hand, of the voltage ($\underline{V}_{NG}$) present between the neutral (N) of the network and earth, the said first and second measurements each being carried out for a value of the resistance of a resistive element connected in series in the said earthing line (68), and **in that** the said asymmetry current ($I_{kR}$) is calculated from values resulting from the said first and second measurements.

6. Process according to any one of Claims 2 to 5, **characterized in that** the said first measurements are carried out for a zero value of the resistance of the said resistive element.

7. Device for maintaining the provision of electrical energy in a polyphase electrical energy distribution network in the presence of a fault on a defective phase of an outgoing feeder line ($D_i$) of the network, comprising means of detection of the fault and of the defective phase and selective means of hooking the defective phase up to earth (18; 53; 68) in such a way as to zero the fault current propagating in the network under the effect of the said fault, **characterized in that** it furthermore comprises first means of calculation (20; 50) of an asymmetry current ($I_{kDD}$; $I_{kR}$) resulting from an imbalance between the phases of the said line ($D_i$) and comprising a first component representative of the said imbalance in the absence of a fault and a second component representative of the said fault current, and second means of calculation (20; 50) of the difference between the value of the said asymmetry current ($I_{kDD}$; $I_{kR}$) delivered by the said first means of calculation and a threshold value ($I_{kDDmax}$; $I_{kRmax}$) determined from the value of the asymmetry current of the said line ($D_i$) or of the network in the absence of a fault in such a way as to verify the zeroing of the fault current, with a view to permitting the maintenance of the provision of electrical energy if the calculated value of the asymmetry current ($I_{kDD}$; $I_{kR}$) is less than the said threshold value ($I_{kDDmax}$; $I_{kRmax}$).

8. Device according to Claim 7, **characterized in that** the said first means of calculation comprise a first facility (24i; 56) for measuring a residual current ($I_{res1}$; $I_{rest}$) propagating in the network and a second facility (22; 54) for measuring the voltage ($\underline{V}_{NG}$) present between the neutral (N) of the network and earth, which facilities are linked to a central processing unit (20; 50) driving a switch (30) for hooking a resistive element (27; 64) up in series in a line (18; 53) for earthing the defective phase and in which is stored an algorithm for calculating the said asymmetry current ($I_{kDD}$; $I_{kR}$) from first and second values delivered by the said first (24i; 56) and second measuring facilities (22; 54), the said second values corresponding to measurements carried out subsequent to the hooking up of the said resistive element.

9. Device according to Claim 8, **characterized in that** the said first measuring facility (24i) is disposed in the said outgoing feeder line.

10. Device according to Claim 8, **characterized in that** the said first measuring facility (56) is disposed in a supply line of a busbar (58, 60, 62) for supplying a set of outgoing feeder lines ($D_i$) of the network with a view to the measurement of the overall residual current ($I_{rest}$) of the said network.

11. Device according to Claim 7, **characterized in that** the first means of calculation comprise a first facility (66) for measuring a leakage current ($I_1$) propagating in the means for hooking the defective phase up to earth (68) and a second facility for measuring the voltage ($\underline{V}_{NG}$) present between the neutral (N) of the network and earth, which facilities are linked to a central processing unit driving a switch for hooking a resistive element up in series with the means for hooking the defective phase up to earth (68) and in which unit is stored an algorithm for calculating the asymmetry current ($I_{kR}$) from first and second measurement values delivered by the said first and second measuring facilities, the said second measurement values corresponding to measurements carried out subsequent to the hooking up of the said resistive element.

FIG.1

FIG.2

EP 0 914 700 B1

DEBUT

NON

32

OUI

34

36

38

40

42

NON

48

44

OUI

46

FIG. 3

12

FIG. 4

FIG.5